# EUROPEAN PATENT SPECIFICATION

(11) **EP 4 174 228 B1**
(45) Date of publication and mention of the grant of the patent: **29.07.2026**
(21) Application number: 21804531.8
(22) Date of filing: 19.05.2021
(51) Int. Cl.: D06F 58/10, D06F 58/20, D06F 37/26, D06F 25/00, D06F 58/02

(54) **INTEGRATED WASHING AND DRYING DEVICE**
INTEGRIERTE WASCH- UND TROCKNUNGSVORRICHTUNG
DISPOSITIF DE LAVAGE ET SÉCHAGE INTÉGRÉ

(30) Priority: 30.06.2020 CN 202010618322
(43) Date of publication of application: 03.05.2023
(73) Proprietor: Qingdao Haier Drum Washing Machine Co., Ltd., Qingdao Shandong 266101 (CN); Haier Smart Home Co., Ltd., Qingdao, Shandong 266101 (CN)
(72) Inventor: LIU, Kai, Qingdao, Shandong 266101 (CN); XU, Sheng, Qingdao, Shandong 266101 (CN); ZHAO, Zhiqiang, Qingdao, Shandong 266101 (CN)
(74) Representative: Bauer, Dirk
(86) International application number: PCT/CN2021/094616
(87) International publication number: WO 2021/228267

(56) References cited:
- EP-B1- 2 398 954
- EP-B1- 2 843 100
- AU-B2- 2002 301 169
- CN-A- 105 603 677
- CN-A- 105 603 677
- CN-A- 106 498 683
- CN-B- 101 168 897
- CN-B- 102 517 859
- CN-U- 208 857 551
- JP-A- 2007 135 962
- JP-A- 2009 078 067
- JP-B2- H0 790 081
- KR-A- 20180 127 097
- KR-Y1- 200 466 585

## Description

### FIELD

The present invention belongs to the technical field of washing and drying, and specifically provides a washing and drying integrated apparatus.

### BACKGROUND

Both functions of washing and drying are combined in a washing and drying integrated apparatus, and the function of spin-drying is further added in some washing and drying integrated apparatuses. For example, published documents CN105603677A, JP2009078067A, and EP2843100B1 each disclose a washing and drying integrated apparatus. The birth of washing and drying integrated apparatuses enables people to conveniently dry the clothing after washing, without the need to take out the clothing and then dry it through other clothing drying apparatuses, which saves cumbersome operation steps and also eliminates the need for people to buy both a washing machine and a drying machine, thus saving the space. Most of the washing and drying integrated apparatuses use an internal circulation mode to dry the clothing, that is, when drying the clothing, air continuously circulates inside the washing and drying integrated apparatus, and is not discharged out of the washing and drying integrated apparatus. Therefore, even if a drying mode is started, the washing and drying integrated apparatus cannot be ventilated to remove its internal odor. Users can only ventilate and deodorize the washing and drying integrated apparatus by opening the door; however, this method has a low efficiency and poor effect, which is not advantageous for realizing ventilation and deodorization.

Accordingly, there is a need for a new washing and drying integrated apparatus in the art to solve the above problem.

### SUMMARY

In order to solve the above problem in the prior art, that is, to solve the problem that the existing washing and drying integrated apparatuses are not convenient for ventilation and deodorization, the present invention provides a washing and drying integrated apparatus as defined in the appended set of claims.

According to the present invention, by arranging the first on-off assembly and the second on-off assembly on the drying air duct and by controlling on-off of the first on-off assembly, an air flow path of the washing and drying integrated apparatus can be switched between a drying state and a ventilation state very conveniently, so as to ventilate and deodorize the washing and drying integrated apparatus; moreover, the fan is also in a working state when in the ventilation state, so that the washing and drying integrated apparatus can be ventilated efficiently, thus achieving faster deodorization. In addition, the first on-off assembly and the second on-off assembly can be selectively opened or closed under the action of wind pressure, so that the wind pressure can be controlled by controlling a rotational speed of the fan, thus achieving the control of the on-off state of the first on-off assembly and the second on-off assembly, without the need to separately provide components for controlling on-off of the first on-off assembly and the second on-off assembly, thus saving the cost. Moreover, it can be ensured that the second on-off assembly is kept in a closed state by the water contained in the drying air duct, so as to prevent the ventilation of the washing and drying integrated apparatus from being affected due to the opening of the second on-off assembly.

Further, the first on-off assembly includes a first magnetic member and a second magnetic member which can be attracted to each other under the action of magnetic force and which are both connected with the drying air duct; at least one of the first magnetic member and the second magnetic member is rotationally connected with the drying air duct; when the washing and drying integrated apparatus executes the drying program, the first magnetic member and the second magnetic member contact under the action of magnetic attraction to block the drying air duct from the outside; when the washing and drying integrated apparatus executes the ventilation program, the first magnetic member and the second magnetic member are separated under the action of wind pressure to communicate the drying air duct with the outside; and when the washing and drying integrated apparatus completes the ventilation program, the first magnetic member and the second magnetic member are reset under the action of magnetic attraction to block the drying air duct from the outside. Through such an arrangement, the first on-off assembly can be automatically reset after the ventilation program is completed, the first on-off assembly can be restored to the closed state with no need for the user to reset it, and there is no need to provide a component dedicated to restoring the first on-off assembly to the closed state, thus saving the cost.

Further, the first on-off assembly includes a first baffle, a first rotating shaft and a first torsional spring; the first baffle is rotationally connected with the drying air duct through the first rotating shaft, and the first torsional spring is sleeved over the first rotating shaft; when the washing and drying integrated apparatus executes the drying program, the first torsional spring enables the first baffle to block the drying air duct from the outside through its own elastic action; when the washing and drying integrated apparatus executes the ventilation program, the first torsional spring is elastically twisted under the action of wind pressure so that the first baffle communicates the drying air duct with the outside; and when the washing and drying integrated apparatus completes the ventilation program, the first torsional spring resets the first baffle through its own elastic action to block the drying air duct from the outside. Through such an arrangement, the first on-off assembly can be automatically reset after the ventilation program is completed, the first on-off assembly can be restored to the closed state with no need for the user to reset it, and there is no need to provide a component dedicated to restoring the first on-off assembly to the closed state, thus saving the cost.

Further, the breathable assembly includes a breathable hole formed on the outer cylinder, a detergent container with an opening, and a breathable pipe communicating the breathable hole with the detergent container. Through such an arrangement, the outer cylinder can be always kept communicated with the outside, so that when the ventilation program is executed, the air in the outer cylinder can be discharged out of the washing and drying integrated apparatus to achieve ventilation, and the pressure inside the outer cylinder can also be balanced with the outside pressure, thus avoiding danger caused by excessive pressure difference between the outer cylinder and the outside.

Further, the breathable assembly includes a third baffle, a third rotating shaft and a third torsional spring; the third baffle is rotationally connected with the outer cylinder through the third rotating shaft, and the third torsional spring is sleeved over the third rotating shaft; when the washing and drying integrated apparatus executes the drying program, the third torsional spring enables the third baffle to block the outer cylinder from the outside through its own elastic action; when the washing and drying integrated apparatus executes the ventilation program, the third torsional spring is elastically twisted under the action of wind pressure so that the third baffle communicates the outer cylinder with the outside; and when the washing and drying integrated apparatus completes the ventilation program, the third torsional spring resets the third baffle through its own elastic action to block the outer cylinder from the outside. Through such an arrangement, the third baffle can be automatically reset after the ventilation program is completed, the third baffle can act to block the drying air duct from the outside with no need for the user to reset it, and there is no need to provide a component dedicated to resetting the action of the third baffle, thus saving the cost.

Further, the water inflow pipe of the washing and drying integrated apparatus includes a U-shaped part, and the breathable assembly includes a water outflow pipe communicated with a bottom end of the U-shaped part, and a valve arranged on the water outflow pipe and capable of controlling on-off of the water outflow pipe. Through such an arrangement, it is unnecessary to specially provide an opening on the outer cylinder for communicating the outer cylinder with the outside, and it is only necessary to configure the water inflow pipe to include the U-shaped part, so that the outer cylinder can be communicated with the outside by means of the water inflow pipe in combination with the water outflow pipe and the valve.

Further, the air outflow part includes a first air outflow pipe and a second air outflow pipe; the first air outflow pipe is communicated with the window gasket through a first air outlet and is located above an inclined part of a door glass of the washing and drying integrated apparatus; the second air outflow pipe passes through a convex part of wrinkles the window gasket; a second air outlet of the second air outflow pipe is formed on a side surface of the second air outflow pipe on a lower side of the convex part, and the second air outlet is arranged close to the convex part. Such an arrangement enables the air flowing out of the first air outlet to be introduced into the outer cylinder through the inclined part when the door is closed, which makes it convenient for the air to enter the outer cylinder, and improves the drying and ventilation efficiency; moreover, the air flowing out of the second air outlet can flow along a circumference of the convex part, thus speeding up the drying speed of the window gasket.

Further, the washing and drying integrated apparatus further includes a drain pipe, which can selectively discharge the water contained in the drying air duct out of the drying air duct. Such an arrangement enables the water contained in the drying air duct to be discharged through the drain pipe, so as to prevent the water from remaining in the drying air duct all the time, and avoid hindering subsequent execution of the drying program.

### BRIEF DESCRIPTION OF DRAWINGS

FIG. 1 is a schematic structural view of an embodiment of the washing and drying integrated apparatus of the present disclosure when a drying program is executed, in which an air flow path at the time of executing the drying program is shown;
FIG. 2 is a partially enlarged view at part A in FIG. 1;
FIG. 3 is a partially enlarged view at part B in FIG. 1;
FIG. 4 is a schematic structural view of an embodiment of the washing and drying integrated apparatus of the present disclosure when a ventilation program is executed, in which an air flow path at the time of executing the ventilation program is shown;
FIG. 5 is a partially enlarged view at part C in FIG. 4; and
FIG. 6 is a partially enlarged view at part D in FIG. 4;

List of reference signs:
1: outer cylinder; 10a: window gasket; 2: inner cylinder; 3: drying air duct; 31: air inflow part; 32: air outflow part; 321: first air outflow pipe; 322: second air outflow pipe; 30a: fan; 4: first on-off assembly; 41: first magnetic member; 411: plate; 412: magnet; 42: second magnetic member; 5: second on-off assembly; 51: third magnetic member; 52: fourth magnetic member; 6: breathable assembly; 61: fifth magnetic member; 62: sixth magnetic member; 7: door glass; 71: inclined part; 8: drain pipe; 81: water inflow part; 82: water outflow part; 80a: third drain valve; 100: opening.

### DETAILED DESCRIPTION

Preferred embodiments of the present disclosure will be described below with reference to the drawings. It should be understood by those skilled in the art that these embodiments are only used to explain the technical principles of the present disclosure, and are not intended to limit the scope of protection of the present disclosure.

It should be noted that in the description of the present disclosure, directional or positional relationships indicated by terms such as "upper", "lower", "inner" and "outer" are based on the directional or positional relationships shown in the drawings. They are merely used for the convenience of description, and do not indicate or imply that the apparatus or element involved must have a specific orientation, or be configured or operated in a specific orientation, and therefore they should not be construed as limiting the present disclosure. In addition, terms "first", "second", "third", "fourth", "fifth" and "sixth" are used for descriptive purpose only, and should not be construed as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be an internal communication between two elements. For those skilled in the art, the specific meaning of the above terms in the present disclosure can be understood according to specific situations.

In view of the problem pointed out in the "BACKGROUND OF THE INVENTION" that the existing washing and drying integrated apparatuses are not convenient for ventilation and deodorization, the present disclosure provides a washing and drying integrated apparatus, which aims to enable the air flow path of the washing and drying integrated apparatus to be switched between a drying state and a ventilation state very conveniently, so as to ventilate and deodorize the washing and drying integrated apparatus; moreover, the washing and drying integrated apparatus can be ventilated efficiently, thus achieving faster deodorization.

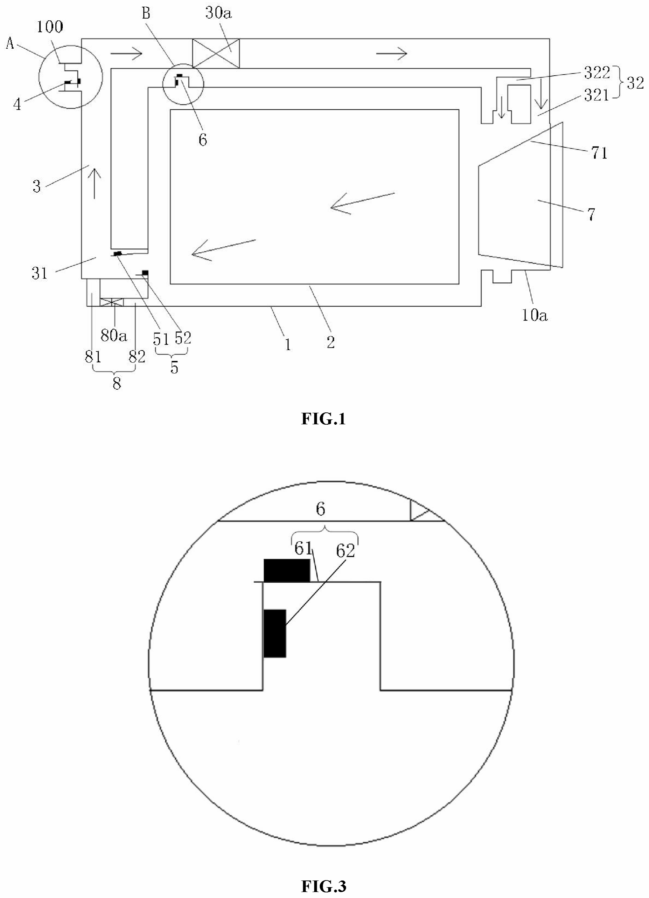

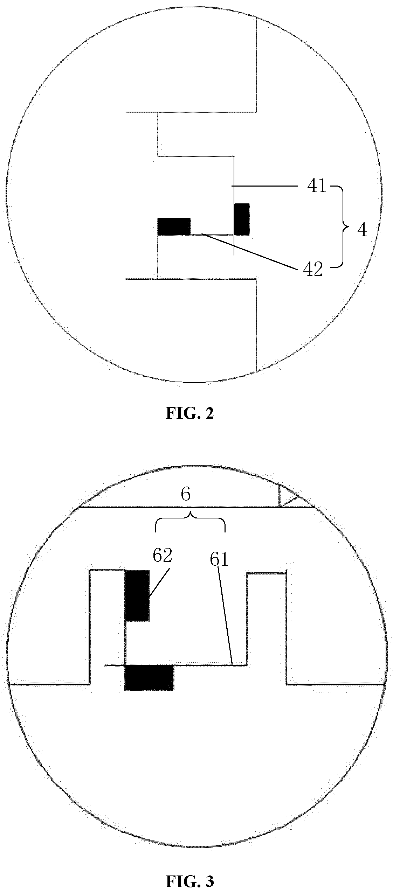

Specifically, as shown in FIGS. 1 to 6, the washing and drying integrated apparatus includes an outer cylinder 1, an inner cylinder 2 rotatably arranged in the outer cylinder 1 for containing clothing, a window gasket 10a connected with a front end of the outer cylinder 1, a drying air duct 3, a fan 30a arranged in the drying air duct 3, and a heat pump system for heating and dehumidifying. An air inflow part 31 of the drying air duct 3 is connected with a rear part of the outer cylinder 1, and an air outflow part 32 of the drying air duct 3 is connected with an upper part of the window gasket 10a. The heat pump system includes an evaporator, a condenser and a compressor that are connected. The compressor is arranged outside the drying air duct 3. An evaporator for dehumidification and a condenser for heating are arranged in sequence in the drying air duct 3 along an air flow path. The drying air duct 3 is provided with a first on-off assembly 4 and a second on-off assembly 5. The first on-off assembly 4 can be selectively opened or closed under the action of wind pressure so that the drying air duct 3 is communicated with or blocked from the outside, and the second on-off assembly 5 can be selectively opened or closed under the action of wind pressure so that the drying air duct 3 is communicated with or blocked from the outer cylinder 1. The washing and drying integrated apparatus further includes a breathable assembly 6, which enables the outer cylinder 1 to be communicated with the outside.

A wind speed can be adjusted by adjusting a rotational speed of the fan 30a, so as to adjust a wind pressure. Initial states of the first on-off assembly 4 and the second on-off assembly 5 are both a closed state, and a wind pressure threshold that makes the first on-off assembly 4 open is larger than a wind pressure threshold that makes the second on-off assembly 5 open.

Specifically, the description will be given by taking a first wind pressure threshold being the wind pressure threshold to open the first on-off assembly 4 and a second wind pressure threshold being the wind pressure threshold to open the second on-off assembly 5 as an example. When the washing and drying integrated apparatus executes the clothing drying program, the fan 30a is started to make the wind pressure in the drying air duct 3 larger than the second wind pressure threshold and smaller than the first wind pressure threshold, so that the first on-off assembly 4 is kept in the closed state and the second on-off assembly 5 is opened under the action of wind pressure. At this point, as shown in FIG. 1, the air flow path is to circulate through the drying air duct 3, the window gasket 10a and the outer cylinder 1, so as to form an internal circulation of air. In this process, the heat pump system is in a working state, so as to heat and dehumidify the air flowing into the drying air duct 3 from the outer cylinder 1 so that the air becomes dry hot air, which then flows into the outer cylinder 1 to dry the clothing.

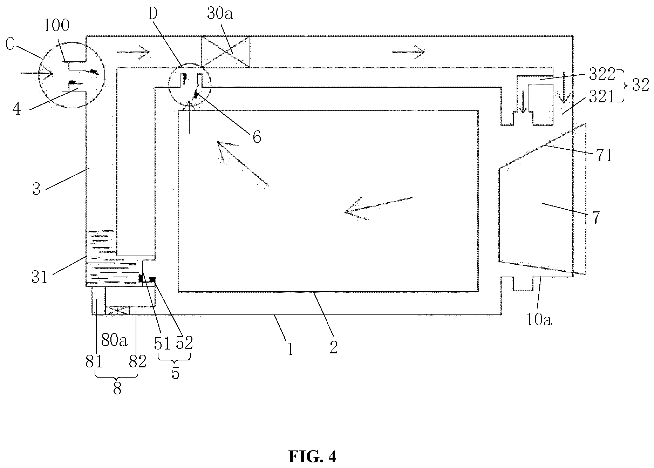

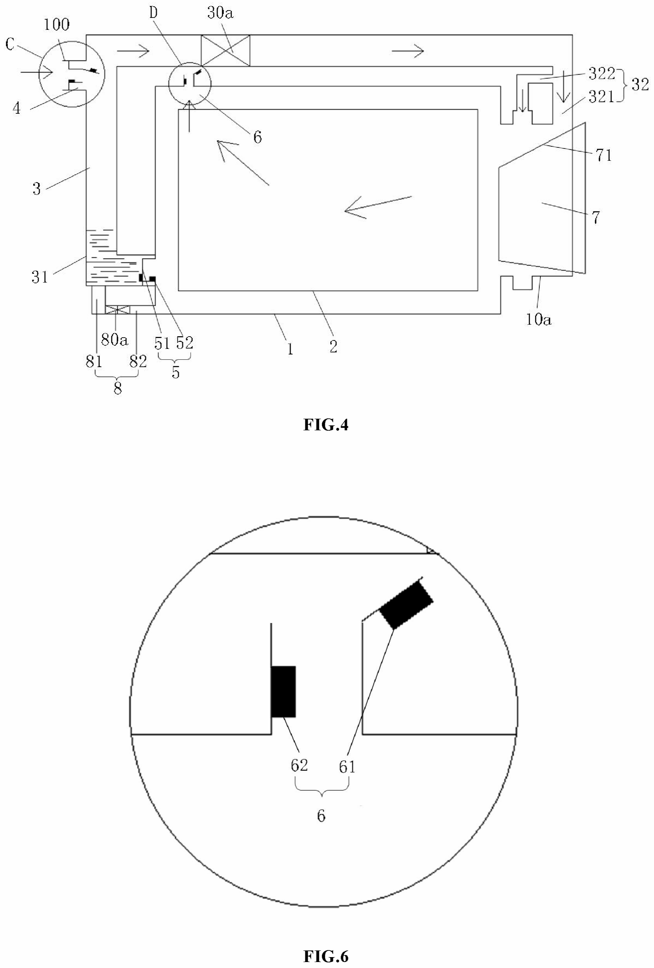

When the washing and drying integrated apparatus executes the ventilation program, before the fan 30a is started, water is injected into the drying air duct 3, and the water accumulates at the second on-off assembly 5 to block the wind. The fan 30a is started to make the wind pressure in the drying air duct 3 larger than the first wind pressure threshold value, so that the first on-off assembly 4 is opened under the action of wind pressure. Since the water in the drying air duct 3 blocks the wind, the second on-off assembly 5 is free from the influence of the wind and thus is kept in the closed state. At this point, as shown in FIG. 4, the air flow path is that the outside air flows in from the first on-off assembly 4 of the drying air duct 3, flows through the drying air duct 3, the window gasket 10a and the outer cylinder 1 in sequence, and is finally discharged out of the outer cylinder 1 from the breathable assembly 6. After being discharged out of the outer cylinder 1, the air can be discharged out of the washing and drying integrated apparatus from slits in a cabinet of the washing and drying integrated apparatus. In this process, the heat pump system can be in the working state, so as to heat and dehumidify the air in the drying air duct 3 so that the air becomes dry hot air, thus drying the outer cylinder 1, the inner cylinder 2 (i.e., the drum) and the window gasket 10a more quickly while ventilating and deodorizing, and avoiding residual water and bacteria growth in the outer cylinder 1, the inner cylinder and the window gasket 10a. Of course, the heat pump system can also be in the closed state when the ventilation program is executed, and the water on the outer cylinder 1, the inner cylinder and the window gasket 10a can also be brought away through air circulation, so that the outer cylinder 1, the inner cylinder and the window gasket 10a are dried.

It should be noted that the drying air duct 3 is provided with a water inflow structure (not shown), and water is injected into the drying air duct 3 through the water inflow structure. The water inflow structure may be a water inflow pipe, a water inlet and the like. Those skilled in the art can flexibly set the specific structure of the water inflow structure in practical applications, as long as water can be injected into the drying air duct 3 through the water inflow structure.

It should also be noted that in addition to the heat pump system described above, the air can also be heated by a heating wire arranged in the drying air duct 3, and the air can be dehumidified by a condenser arranged in the drying air duct 3, so that the air in the drying air duct 3 becomes dry hot air, thus drying the clothing in the outer cylinder 1. Those skilled in the art can flexibly set the specific structure of the device(s) for heating and drying the air in practical applications, as long as the device(s) can change the air in the drying air duct 3 into dry hot air for clothing drying.

In a possible situation, as shown in FIGS. 1, 2, 4 and 5, the first on-off assembly 4 includes a first magnetic member 41 and a second magnetic member 42 which can be attracted to each other under the action of magnetic force and which are both connected with the drying air duct 3. The first magnetic member 41 is rotationally connected with the drying air duct 3, and the second magnetic member 42 is fixedly connected with the drying air duct 3. When the washing and drying integrated apparatus executes the drying program, the first magnetic member 41 and the second magnetic member 42 contact under the action of magnetic attraction to block the drying air duct 3 from the outside; when the washing and drying integrated apparatus executes the ventilation program, the first magnetic member 41 is rotated under the action of wind pressure so that the first magnetic member 41 and the second magnetic member 42 are separated to communicate the drying air duct 3 with the outside; and when the washing and drying integrated apparatus completes the ventilation program, the first magnetic member 41 and the second magnetic member 42 are reset under the action of magnetic attraction to block the drying air duct 3 from the outside. Of course, it is also possible that the second magnetic member 42 is rotationally connected with the drying air duct 3, and the first magnetic member 41 is fixedly connected with the drying air duct 3; in this situation, when the washing and drying integrated apparatus executes the ventilation program, the second magnetic member 42 is rotated under the action of wind pressure so that the first magnetic member 41 and the second magnetic member 42 are separated to communicate the drying air duct 3 with the outside. It is also possible that both the first magnetic member 41 and the second magnetic member 42 are rotationally connected with the drying air duct 3; in this situation, when the washing and drying integrated apparatus executes the ventilation program, both the first magnetic member 41 and the second magnetic member 42 are rotated under the action of wind pressure so that the first magnetic member 41 and the second magnetic member 42 are separated to communicate the drying air duct 3 with the outside. It should be noted that the first on-off assembly 4 can be arranged on a side wall of the drying air duct 3 to control opening and closing of an opening on the side wall of the drying air duct 3 so that the drying air duct 3 is communicated with or blocked from the outside. For example, the drying air duct 3 can be communicated with the outside through the opening provided on the side wall. When the first on-off assembly 4 is in the closed state, the first magnetic member 41 and the second magnetic member 42 contact with each other under the action of magnetic attraction to cover the opening so that the opening is closed, thus blocking the drying air duct 3 from the outside. When the first on-off assembly 4 is in the open state, the first magnetic member 41 is separated from the second magnetic member 42 to open the opening so that the drying air duct 3 is communicated with the outside. Of course, it is also possible to use the cross section position arranged in the drying air duct 3 to control on-off of the drying air duct 3 so that the drying air duct 3 is communicated with or blocked from the outside (just as shown in FIGS. 1, 2, 4 and 5). For example, the drying air duct 3 is communicated with the outside through an opening 100 on the cross section of the drying air duct 3. When the first on-off assembly 4 is in the closed state, the first magnetic member 41 and the second magnetic member 42 contact with each other under the action of magnetic attraction to cover the opening 100 so that the opening 100 is closed (or the first magnetic member 41 and the second magnetic member 42 are arranged close to the opening 100; they contact with each other under the action of magnetic attraction and are located in the cross section position in the drying air duct 3, so that air cannot enter through the opening 100), thus blocking the drying air duct 3 from the outside. When the first on-off assembly 4 is in the open state, the first magnetic member 41 and the second magnetic member 42 are separated to open the opening 100 (or the first magnetic member 41 and the second magnetic member 42 are separated to allow air to enter through the opening 100), so that the drying air duct 3 is communicated with the outside. The above first magnetic member 41 can be magnetic throughout itself; for example, it may be a permanent magnet or an electromagnet. In addition, the first magnetic member 41 can also be partially magnetic; for example, as shown in FIG. 5, the first magnetic member 41 includes a plate 411 and a magnet 412 (a permanent magnet or an electromagnet) arranged on the plate 411. The plate 411 is rotationally connected with the drying air duct 3, and the first magnetic member 41 and the second magnetic member 42 are attracted to each other through the magnet 412. When the first on-off assembly 4 is in the closed state, the plate 411 contacts with the second magnetic member 42 to block the drying air duct 3 from the outside. When the second on-off assembly 5 is in the open state, the plate 411 is separated from the second magnetic member 42 so that the drying air duct 3 is communicated with the outside. Those skilled in the art can flexibly set the specific structure of the first magnetic member 41 in practical applications, and such adjustments and changes to the specific structure of the first magnetic member 41 do not constitute limitations to the present disclosure, which should all be defined within the scope of protection of the present disclosure. Similarly, the second magnetic member 42 can also be magnetic throughout itself or partially magnetic. Those skilled in the art can flexibly set the specific structure of the second magnetic member 42 in practical applications, and such adjustments and changes to the specific structure of the second magnetic member 42 do not constitute limitations to the present disclosure, which should all be defined within the scope of protection of the present disclosure.

In a possible situation, the first on-off assembly 4 includes a first baffle, a first rotating shaft and a first torsional spring; the first baffle is rotationally connected with the drying air duct 3 through the first rotating shaft, and the first torsional spring is sleeved over the first rotating shaft; when the washing and drying integrated apparatus executes the drying program, the first torsional spring enables the first baffle to block the drying air duct 3 from the outside through its own elastic action; when the washing and drying integrated apparatus executes the ventilation program, the first torsional spring is elastically twisted under the action of wind pressure so that the first baffle communicates the drying air duct 3 with the outside; and when the washing and drying integrated apparatus completes the ventilation program, the first torsional spring resets the first baffle through its own elastic action to block the drying air duct 3 from the outside. If the first torsional spring can realize the above functions, it is necessary that the first torsional spring is configured in such a way that a first end of the first torsional spring does not move relative to the first rotating shaft, whereas a second end of the first torsional spring can move relative to the first rotating shaft when the first baffle rotates. Specifically, the first end of the first torsional spring can be directly fixed on the first rotating shaft, and the second end of the first torsional spring can be directly fixed on the drying air duct 3. Of course, the above arrangement positions of both ends of the first torsional spring only illustrate a possible situation, and those skilled in the art can flexibly set the arrangement positions of both ends of the first torsional spring in practical applications, as long as the arrangement positions enable the first torsional spring to realize its above functions. For example, the first end of the first torsional spring can also be directly fixed on a component fixed to the first rotating shaft, and the second end of the first torsional spring can be directly fixed on a component fixed to the drying air duct 3. It should be noted that the first on-off assembly 4 can be arranged on the side wall of the drying air duct 3 to control opening and closing of an opening on the side wall of the drying air duct 3 so that the drying air duct 3 is communicated with or blocked from the outside. For example, the drying air duct 3 can be communicated with the outside through the opening provided on the side wall. When the first on-off assembly 4 is in the closed state, the first baffle covers the opening under the elastic action of the first torsional spring itself so that the opening is closed, thus blocking the drying air duct 3 from the outside. When the first on-off assembly 4 is in the open state, the first torsional spring is elastically twisted under the action of wind pressure to rotate the first baffle, so that the opening is opened and the drying air duct 3 is communicated with the outside. Of course, it is also possible to use the cross section position arranged in the drying air duct 3 to control on-off of the drying air duct 3 so that the drying air duct 3 is communicated with or blocked from the outside. For example, the drying air duct 3 is communicated with the outside through an opening 0 on the cross section of the drying air duct 3. When the first on-off assembly 4 is in the closed state, the first baffle covers the opening under the elastic action of the first torsional spring itself so that the opening is closed (or the first baffle is arranged close to the opening, and is located in the cross section position in the drying air duct 3 under the elastic action of the first torsional spring itself, so that air cannot enter through the opening), thus blocking the drying air duct 3 from the outside. When the first on-off assembly 4 is in the open state, the first torsional spring is elastically twisted under the action of wind pressure to rotate the first baffle so that the opening is opened (or the first torsional spring is elastically twisted under the action of wind pressure to rotate the first baffle, allowing air to enter through the opening), thus communicating the drying air duct 3 with the outside.

Those skilled in the art can flexibly set the specific structure of the first on-off assembly 4 in practical applications, as long as the first on-off assembly 4 can be selectively opened or closed under the action of wind pressure to make the drying air duct 3 be communicated with or blocked from the outside.

In a possible situation, as shown in FIGS. 1 and 4, the second on-off assembly 5 includes a third magnetic member 51 and a fourth magnetic member 52 which can be attracted to each other under the action of magnetic force and which are both connected with the drying air duct 3; the third magnetic member 51 is rotationally connected with the drying air duct 3, and the fourth magnetic member 52 is fixedly connected with the drying air duct 3; when the washing and drying integrated apparatus executes the drying program, the third magnetic member 51 is rotated under the action of wind pressure so that the third magnetic member 51 and the fourth magnetic member 52 are separated, thus communicating the drying air duct 3 with the outer cylinder 1; and when the washing and drying integrated apparatus executes the ventilation program, the water contained in the drying air duct 3 blocks the air to allow the third magnetic member 51 to contact with the fourth magnetic member 52, so that the drying air duct 3 is blocked from the outer cylinder 1. Of course, similar to the first on-off assembly 4, it is also possible that the fourth magnetic member 52 is rotationally connected with the drying air duct 3, and the third magnetic member 51 is fixedly connected with the drying air duct 3, or both the third magnetic member 51 and the fourth magnetic member 52 are rotationally connected with the drying air duct 3. Similar to the first magnetic member 41, both the third magnetic member 51 and the fourth magnetic member 52 can also be magnetic throughout themselves or partially magnetic. Those skilled in the art can flexibly set the specific structures of the third magnetic member 51 and the fourth magnetic member 52 in practical applications, and such adjustments and changes to the specific structures of the third magnetic member 51 and the fourth magnetic member 52 do not constitute limitations to the present disclosure, which should all be defined within the scope of protection of the present disclosure.

In another possible situation, the second on-off assembly 5 includes a second baffle, a second rotating shaft and a second torsional spring; the second baffle is rotationally connected with the drying air duct 3 through the second rotating shaft, and the second torsional spring is sleeved over the second rotating shaft; when the washing and drying integrated apparatus executes the drying program, the second torsional spring is elastically twisted under the action of wind pressure so that the second baffle communicates the drying air duct 3 with the outer cylinder 1; and when the washing and drying integrated apparatus executes the ventilation program, the water contained in the drying air duct 3 blocks the air to allow the second torsional spring to block the drying air duct 3 from the outer cylinder 1 by the second baffle through its own elastic action. If the second torsional spring can realize the above functions, it is necessary that the second torsional spring is configured in such a way that a first end of the second torsional spring does not move relative to the second rotating shaft, whereas a second end of the second torsional spring can move relative to the second rotating shaft when the second baffle rotates. Specifically, the first end of the second torsional spring can be directly fixed on the second rotating shaft, and the second end of the second torsional spring can be directly fixed on the drying air duct 3. Of course, the above arrangement positions of both ends of the second torsional spring only illustrate a possible situation, and those skilled in the art can flexibly set the arrangement positions of both ends of the second torsional spring in practical applications, as long as the arrangement positions enable the second torsional spring to realize its above functions. For example, the first end of the second torsional spring can also be directly fixed on a component fixed to the second rotating shaft, and the second end of the second torsional spring can be directly fixed on a component fixed to the drying air duct 3.

Those skilled in the art can flexibly set the specific structure of the second on-off assembly 5 in practical applications, as long as the second on-off assembly 5 can be selectively opened or closed under the action of wind pressure so that the drying air duct 3 is communicated with or blocked from the outer cylinder 1.

Preferably, the breathable assembly 6 includes a breathable hole formed on the outer cylinder 1, a detergent container with an opening, and a breathable pipe communicating the breathable hole with the detergent container. Since the detergent container has an opening, the outer cylinder can always be communicated with the outside through the breathable hole, the breathable pipe and the detergent container. Therefore, when the ventilation program is executed, the air in the outer cylinder 1 can be discharged out of the washing and drying integrated apparatus through the breathable hole, the breathable pipe and the detergent container in sequence to achieve ventilation.

Preferably, the breathable assembly 6 includes a third baffle, a third rotating shaft and a third torsional spring; the third baffle is rotationally connected with the outer cylinder 1 through the third rotating shaft, and the third torsional spring is sleeved over the third rotating shaft; when the washing and drying integrated apparatus executes the drying program, the third torsional spring enables the third baffle to block the outer cylinder 1 from the outside through its own elastic action; when the washing and drying integrated apparatus executes the ventilation program, the third torsional spring is elastically twisted under the action of wind pressure so that the third baffle communicates the outer cylinder 1 with the outside; and when the washing and drying integrated apparatus completes the ventilation program, the third torsional spring resets the third baffle through its own elastic action to block the outer cylinder 1 from the outside. If the third torsional spring can realize the above functions, it is necessary that the third torsional spring is configured in such a way that a first end of the third torsional spring does not move relative to the third rotating shaft, whereas a second end of the third torsional spring can move relative to the third rotating shaft when the third baffle rotates. Specifically, the first end of the third torsional spring can be directly fixed on the third rotating shaft, and the second end of the third torsional spring can be directly fixed on the outer cylinder 1. Of course, the above arrangement positions of both ends of the third torsional spring only illustrate a possible situation, and those skilled in the art can flexibly set the arrangement positions of both ends of the third torsional spring in practical applications, as long as the arrangement positions enable the third torsional spring to realize its above functions. For example, the first end of the third torsional spring can also be directly fixed on a component fixed to the third rotating shaft, and the second end of the third torsional spring can be directly fixed on a component fixed to the outer cylinder 1.

Preferably, the water inflow pipe of the washing and drying integrated apparatus includes a U-shaped part, and the water inflow pipe is communicated with the outer cylinder 1. When washing the clothing, water is injected into the outer cylinder 1 through the water inflow pipe to wash or rinse the clothing. After the water injection is completed, part of the water will be stored in the U-shaped part, so that the outer cylinder 1 cannot be communicated with the outside through the water inflow pipe. The breathable assembly 6 includes a water outflow pipe communicated with a bottom end of the U-shaped part, and a valve arranged on the water outflow pipe and capable of controlling on-off of the water outflow pipe. When the drying program is executed, the valve on the water outflow pipe is kept closed to prevent the water stored in the U-shaped part from flowing out, thus blocking the outer cylinder 1 from the outside. When the ventilation program is executed, the valve on the water outflow pipe is opened, so that the water stored in the U-shaped part flows out through the water outflow pipe, thus enabling the outer cylinder 1 to be communicated with the outside through the water inflow pipe.

Preferably, as shown in FIGS. 1, 3, 4 and 6, the breathable assembly 6 includes a fifth magnetic member 61 and a sixth magnetic member 62 which can be attracted to each other under the action of magnetic force and which are connected with the outer cylinder 1; the fifth magnetic member 61 is rotationally connected with the outer cylinder 1, and the sixth magnetic member 62 is fixedly connected with the outer cylinder 1; when the washing and drying integrated apparatus executes the drying program, the fifth magnetic member 61 and the sixth magnetic member 62 contact with each other under the action of magnetic attraction, thus blocking the outer cylinder 1 from the outside; and when the washing and drying integrated apparatus executes the ventilation program, the fifth magnetic member 61 is rotated under the action of wind pressure so that the fifth magnetic member 61 and the sixth magnetic member 62 are separated to communicate the outer cylinder 1 with the outside; and when the washing and drying integrated apparatus completes the ventilation program, the fifth magnetic member 61 and the sixth magnetic member 62 are reset under the action of magnetic attraction, thus blocking the outer cylinder 1 from the outside. Of course, it is also possible that the sixth magnetic member 62 is rotationally connected with the outer cylinder 1, and the fifth magnetic member 61 is fixedly connected with the outer cylinder 1; in this situation, when the washing and drying integrated apparatus executes the ventilation program, the sixth magnetic member 62 is rotated under the action of wind pressure so that the fifth magnetic member 61 and the sixth magnetic member 62 are separated to communicate the outer cylinder 1 with the outside. It is also possible that both the fifth magnetic member 61 and the sixth magnetic member 62 are rotationally connected with the outer cylinder 1; in this situation, when the washing and drying integrated apparatus executes the ventilation program, both the fifth magnetic member 61 and the sixth magnetic member 62 are rotated under the action of wind pressure so that they are separated to communicate the outer cylinder 1 with the outside. Similar to the first magnetic member 41, both the fifth magnetic member 61 and the sixth magnetic member 62 can also be magnetic throughout themselves or partially magnetic. Those skilled in the art can flexibly set the specific structures of the fifth magnetic member 61 and the sixth magnetic member 62 in practical applications, and such adjustments and changes to the specific structures of the fifth magnetic member 61 and the sixth magnetic member 62 do not constitute limitations to the present disclosure, which should all be defined within the scope of protection of the present disclosure.

Those skilled in the art can flexibly set the specific structure of the breathable assembly 6 in practical applications. Such adjustments and changes to the specific structure of the breathable assembly 6 do not constitute limitations to the present disclosure, which should all be defined within the scope of protection of the present disclosure.

Preferably, as shown in FIGS. 1 and 4, the air outflow part 32 includes a first air outflow pipe 321 and a second air outflow pipe 322. The first air outflow pipe 321 is communicated with the window gasket 10a through a first air outlet and is located above an inclined part 71 of a door glass 7 of the washing and drying integrated apparatus. The air flows out of the first air outlet and then moves to the inclined part 71. Under the action of the inclined part 71, the air is introduced into the outer cylinder 1. The second air outflow pipe 322 passes through a convex part of wrinkles of the window gasket 10a. A second air outlet of the second air outflow pipe 322 is formed on a side surface of the second air outflow pipe 322 on a lower side of the convex part, and the second air outlet is arranged close to the convex part. When the door is closed, the window gasket 10a is located between the outer cylinder 1 and the door to effect sealing. The window gasket 10a has wrinkles, and a part of the wrinkles that protrudes from a clothing dispensing opening of the outer cylinder 1 to the surroundings is the convex part. It should be noted that by taking the second air outflow pipe 322 being a cylindrical pipe as an example, the second air outlet is formed on a side surface of the second air outflow pipe 322, that is, the second air outlet is arranged on a cylindrical wall surface. Since the second air outflow pipe 322 passes through the convex part, the air flowing out of the second air outlet can flow along the circumference of the convex part, thus speeding up a drying speed of the window gasket 10a.

Preferably, the washing and drying integrated apparatus also includes a drain pipe 8, which can selectively discharge the water contained in the drying air duct 3 out of the drying air duct 3. Such an arrangement enables the water contained in the drying air duct 3 to be discharged through the drain pipe 8 after the ventilation program is completed or before the drying program is started, so as to prevent the water from remaining in the drying air duct 3 all the time, and avoid hindering subsequent execution of the drying program.

Preferably, a water inflow part 81 of the drain pipe 8 is connected at a position on the drying air duct 3 that is close to the second on-off assembly 5, and a water outflow part 82 of the drain pipe 8 includes a first water outflow pipe and a second water outflow pipe. The first water outflow pipe is provided with a first drain valve that can control on-off of the first water outflow pipe, and the first water outflow pipe is communicated with the bottom of the outer cylinder 1. The second water outflow pipe is provided with a second drain valve that can control on-off of the second water outflow pipe, and the second water outflow pipe is communicated with a discharge pipe of the washing and drying integrated apparatus. When the ventilation program is completed and the user will soon use the washing and drying integrated apparatus to wash or rinse the clothing, the user can choose to control the first drain valve to be opened so as to discharge the water in the drying air duct 3 into the outer cylinder 1 for use in subsequent washing or rinsing of the clothing. When the ventilation program is completed and the user will stop using the washing and drying integrated apparatus, the user can choose to control the second drain valve to be opened so as to discharge the water in the drying air duct 3 into the discharge pipe so that the water is directly discharged out of the washing and drying integrated apparatus, thus avoiding bacteria growth or odor generation caused by accumulation of water inside the washing and drying integrated apparatus.

Preferably, as shown in FIGS. 1 and 4, the water inflow part 81 of the drain pipe 8 is connected at the position on the drying air duct 3 that is close to the second on-off assembly 5, the water outflow part 82 of the drain pipe 8 is only communicated with the bottom of the outer cylinder 1, and the drain pipe 8 is provided with a third drain valve 80a that can control on-off of the drain pipe 8. After the ventilation program is completed, the user can choose to control the third drain valve 80a to be opened so that the water in the drying air duct 3 is discharged into the outer cylinder 1.

Preferably, the water inflow part 81 of the drain pipe 8 is connected at the position on the drying air duct 3 that is close to the second on-off assembly 5, the water outflow part 82 of the drain pipe 8 is only communicated with the discharge pipe of the washing and drying integrated apparatus, and the drain pipe 8 is provided with a fourth drain valve that can control on-off of the drain pipe 8. After the ventilation program is completed, the user can choose to control the fourth drain valve to be opened so as to discharge the water in the drying air duct 3 into the discharge pipe so that the water is directly discharged out of the washing and drying integrated apparatus, thus avoiding bacteria growth or odor generation caused by accumulation of water inside the washing and drying integrated apparatus.

Hitherto, the technical solutions of the present disclosure have been described in conjunction with the preferred embodiments shown in the accompanying drawings, but it is easily understood by those skilled in the art that the scope of protection of the present disclosure is obviously not limited to these specific embodiments and that those skilled in the art can make various changes without departing from the scope of protection as defined by the appended claims.

## Claims

1. A washing and drying integrated apparatus, wherein the washing and drying integrated apparatus comprises an outer cylinder (1), a window gasket (10a) connected with a front end of the outer cylinder (1), a drying air duct (3), and a fan (30a) arranged in the drying air duct (3); wherein an air inflow part (31) of the drying air duct (3) is communicated with a rear part of the outer cylinder (1), and an air outflow part (32) of the drying air duct (3) is communicated with an upper part of the window gasket (10a); wherein the drying air duct (3) is provided with a first on-off assembly (4) and a second on-off assembly (5); wherein the washing and drying integrated apparatus further comprises a breathable assembly (6), which enables the outer cylinder (1) to be communicated with the outside;
**characterized in that** the first on-off assembly (4) is configured to be opened at a first wind pressure threshold, and the second on-off assembly (5) is configured to be opened at a second wind pressure threshold,
wherein when the washing and drying integrated apparatus executes a clothing drying program, the fan (30a) is configured to be started to make wind pressure in the drying air duct (3) larger than the second wind pressure threshold and smaller than the first wind pressure threshold so that the first on-off assembly (4) is closed, the breathable assembly (6) is closed to block the outer cylinder (1) from the outside of the outer cylinder (1), and the second on-off assembly (5) is opened under the action of wind pressure; and
wherein when the washing and drying integrated apparatus executes a ventilation program, water is injected into the drying air duct (3) and accumulates at the second on-off assembly (5) for blocking the wind before the fan (30a) is started, and then the fan (30a) is started to make the wind pressure in the drying air duct (3) larger than the first wind pressure threshold so that the first on-off assembly (4) is opened and the breathable assembly (6) is opened under the action of wind pressure acting on the inside of the outer cylinder (1) and the drying air duct (3) is contained with the water to keep the second on-off assembly (5) closed.

2. The washing and drying integrated apparatus according to claim 1, wherein the first on-off assembly (4) comprises a first magnetic member (41) and a second magnetic member (42) which can be attracted to each other under the action of magnetic force and which are both connected with the drying air duct (3); at least one of the first magnetic member (41) and the second magnetic member (42) is rotationally connected with the drying air duct (3);
when the washing and drying integrated apparatus executes the drying program, the first magnetic member (41) and the second magnetic member (42) contact under the action of magnetic attraction to block the drying air duct (3) from the outside;
when the washing and drying integrated apparatus executes the ventilation program, the first magnetic member (41) and the second magnetic member (42) are separated under the action of wind pressure to communicate the drying air duct (3) with the outside; and
when the washing and drying integrated apparatus completes the ventilation program, the first magnetic member (41) and the second magnetic member (42) are reset under the action of magnetic attraction to block the drying air duct (3) from the outside.

3. The washing and drying integrated apparatus according to claim 1, wherein the second on-off assembly (5) comprises a third magnetic member (51) and a fourth magnetic member (52) which can be attracted to each other under the action of magnetic force and which are both connected with the drying air duct (3); at least one of the third magnetic member (51) and the fourth magnetic member (52) is rotationally connected with the drying air duct (3);
when the washing and drying integrated apparatus executes the drying program, the third magnetic member (51) and the fourth magnetic member (52) are separated under the action of wind pressure to communicate the drying air duct (3) with the outer cylinder (1); and
when the washing and drying integrated apparatus executes the ventilation program, the water contained in the drying air duct (3) blocks the wind to allow the third magnetic member (51) to contact with the fourth magnetic member (52), so that the drying air duct (3) is blocked from the outer cylinder (1).

4. The washing and drying integrated apparatus according to claim 1, wherein the first on-off assembly (4) comprises a first baffle, a first rotating shaft and a first torsional spring; the first baffle is rotationally connected with the drying air duct (3) through the first rotating shaft, and the first torsional spring is sleeved over the first rotating shaft;
when the washing and drying integrated apparatus executes the drying program, the first torsional spring enables the first baffle to block the drying air duct (3) from the outside through its own elastic action;
when the washing and drying integrated apparatus executes the ventilation program, the first torsional spring is elastically twisted under the action of wind pressure so that the first baffle communicates the drying air duct (3) with the outside; and
when the washing and drying integrated apparatus completes the ventilation program, the first torsional spring resets the first baffle through its own elastic action to block the drying air duct (3) from the outside.

5. The washing and drying integrated apparatus according to claim 1, wherein the second on-off assembly (5) comprises a second baffle, a second rotating shaft and a second torsional spring; the second baffle is rotationally connected with the drying air duct (3) through the second rotating shaft, and the second torsional spring is sleeved over the second rotating shaft;
when the washing and drying integrated apparatus executes the drying program, the second torsional spring is elastically twisted under the action of wind pressure so that the second baffle communicates the drying air duct (3) with the outer cylinder (1); and
when the washing and drying integrated apparatus executes the ventilation program, the water contained in the drying air duct (3) blocks the wind to allow the second torsional spring to block the drying air duct (3) from the outer cylinder (1) by the second baffle through its own elastic action.

6. The washing and drying integrated apparatus according to any one of claims 1 to 5, wherein the breathable assembly (6) comprises a breathable hole formed on the outer cylinder (1), a detergent container with an opening (110), and a breathable pipe communicating the breathable hole with the detergent container.

7. The washing and drying integrated apparatus according to any one of claims 1 to 5, wherein the breathable assembly (6) comprises a third baffle, a third rotating shaft and a third torsional spring; the third baffle is rotationally connected with the outer cylinder (1) through the third rotating shaft, and the third torsional spring is sleeved over the third rotating shaft;
when the washing and drying integrated apparatus executes the drying program, the third torsional spring enables the third baffle to block the outer cylinder (1) from the outside through its own elastic action;
when the washing and drying integrated apparatus executes the ventilation program, the third torsional spring is elastically twisted under the action of wind pressure so that the third baffle communicates the outer cylinder (1) with the outside; and
when the washing and drying integrated apparatus completes the ventilation program, the third torsional spring resets the third baffle through its own elastic action to block the outer cylinder (1) from the outside.

8. The washing and drying integrated apparatus according to any one of claims 1 to 5, wherein a water inflow pipe of the washing and drying integrated apparatus comprises a U-shaped part, and the breathable assembly (6) comprises a water outflow pipe communicated with a bottom end of the U-shaped part, and a valve arranged on the water outflow pipe and capable of controlling on-off of the water outflow pipe.

9. The washing and drying integrated apparatus according to any one of claims 1 to 5, wherein the air outflow part (32) comprises a first air outflow pipe (321) and a second air outflow pipe (322); the first air outflow pipe (321) is communicated with the window gasket (10a) through a first air outlet and is located above an inclined part (71) of a door glass (7) of the washing and drying integrated apparatus; the second air outflow pipe (322) passes through a convex part of wrinkles of the window gasket (10a); a second air outlet of the second air outflow pipe (322) is formed on a side surface of the second air outflow pipe (322) on a lower side of the convex part, and the second air outlet is arranged close to the convex part.

10. The washing and drying integrated apparatus according to any one of claims 1 to 5, wherein the washing and drying integrated apparatus further comprises a drain pipe (8), which can selectively discharge the water contained in the drying air duct (3) out of the drying air duct (3).

## Patentansprüche

1. Ein Wasch- und Trockengerät, wobei das Wasch- und Trockengerät einen Außenzylinder (1), eine Fensterdichtung (10a), die an einem vorderen Ende des Außenzylinders (1) angebracht ist, eine Trocknungsluftkanal (3) und einen in dem Trocknungsluftkanal (3) angeordneten Lüfter (30a) umfasst; wobei ein Luftzulaufbereich (31) des Trocknungsluftkanals (3) mit einem hinteren Teil des Außenzylinders (1) in Verbindung steht und ein Luftablaufbereich (32) des Trocknungsluftkanals (3) mit einem oberen Teil der Fensterdichtung (10a) in Verbindung steht; wobei der Trocknungsluftkanal (3) mit einer ersten Schaltvorrichtung (4) und einer zweiten Schaltvorrichtung (5) ausgestattet ist; wobei das Wasch- und Trockengerät weiterhin eine atmungsaktive Vorrichtung (6) umfasst, die es ermöglicht, den Außenzylinder (1) mit der Außenwelt in Verbindung zu setzen;
**gekennzeichnet dadurch, dass** die erste Schaltvorrichtung (4) so ausgelegt ist, dass sie bei einem ersten Winddruck-Schwellenwert geöffnet wird, und die zweite Schaltvorrichtung (5) so ausgelegt ist, dass sie bei einem zweiten Winddruck-Schwellenwert geöffnet wird,
wobei das Wasch- und Trockengerät bei der Ausführung eines Wäschetrocknungsprogramms den Lüfter (30a) so einstellt, dass der Winddruck in der Trocknungsluftleitung (3) größer als die zweite Winddruckschwelle und kleiner als die erste Winddruckschwelle ist, wodurch die erste Drosselvorrichtung (4) geschlossen, die atmungsaktive Vorrichtung (6) geschlossen wird, um den Außenzylinder (1) von außen abzudichten, und die zweite Drosselvorrichtung (5) unter der Wirkung des Winddrucks geöffnet wird; und
wobei, wenn das Wasch- und Trockengeräte ein Belüftungsprogramm ausführt, Wasser in den Trocknungsluftkanal (3) eingespritzt wird und sich an der zweiten Drosselvorrichtung (5) ansammelt, um die Luft vor dem Start des Lüfters (30a) zu blockieren, und dann der Lüfter (30a) gestartet wird, um den Luftdruck im Trocknungsluftkanal (3) größer als den ersten Druckschwellenwert zu machen, sodass die erste Drosselvorrichtung (4) geöffnet wird und die atmungsaktive Vorrichtung (6) unter der Wirkung des auf die Außenhülle (1) wirkenden Luftdrucks geöffnet wird und der Trocknungsluftkanal (3) mit Wasser gefüllt ist, um die zweite Drosselvorrichtung (5) geschlossen zu halten.

2. Das Wasch- und Trockengeräte nach Anspruch 1, bei der die erste Schaltvorrichtung (4) ein erstes magnetisches Element (41) und ein zweites magnetisches Element (42) umfasst, die unter der Wirkung der Magnetkraft aufeinander angezogen werden können und beide mit dem Trocknungsluftkanal (3) verbunden sind; mindestens eines der ersten magnetischen Element (41) und des zweiten magnetischen Elements (42) ist drehbar mit dem Trocknungsluftkanal (3) verbunden;
Wenn das Wasch- und Trockengeräte das Trockenprogramm ausführt, berühren sich das erste Magnetglied (41) und das zweite Magnetglied (42) unter der Wirkung der magnetischen Anziehung, um den Trocknungsluftkanal (3) von außen zu blockieren.
Wenn das Wasch- und Trockengeräte das Belüftungsprogramm ausführt, werden das erste magnetische Element (41) und das zweite magnetische Element (42) unter dem Einfluss des Winddrucks voneinander getrennt, um die Trocknungsluftkanal (3) mit der Außenluft zu verbinden; und
Wenn die Wasch- und Trockengerätekombination das Belüftungsprogramm beendet, werden das erste Magnetglied (41) und das zweite Magnetglied (42) unter der Wirkung der magnetischen Anziehung zurückgesetzt, um den Trocknungsluftkanal (3) von außen zu blockieren.

3. Das Wasch- und Trockengerät nach Anspruch 1, wobei die zweite An/Aus-Vorrichtung (5) ein drittes magnetisches Element (51) und ein viertes magnetisches Element (52) umfasst, die unter der Wirkung der Magnetkraft aufeinander angezogen werden können und beide mit der Trocknungsluftleitung (3) verbunden sind; mindestens eines der dritte magnetische Element (51) und vierte magnetische Element (52) ist drehbar mit der Trocknungsluftleitung (3) verbunden;
Wenn das Wasch- und Trockengerät das Trockenprogramm ausführt, werden das dritte Magnetglied (51) und das vierte Magnetglied (52) unter der Wirkung des Luftdrucks getrennt, um den Trockenluftkanal (3) mit dem äußeren Zylinder (1) zu verbinden; und
Wenn das Wasch- und Trockengerät das Lüftungsprogramm ausführt, blockiert das in der Trocknungsluftleitung (3) enthaltene Wasser den Luftstrom, sodass sich das dritte magnetische Element (51) mit dem vierten magnetischen Element (52) in Berührung bringt, wodurch die Trocknungsluftleitung (3) vom äußeren Zylinder (1) blockiert wird.

4. Das Wasch- und Trockengerät gemäß Anspruch 1, wobei die erste Schaltvorrichtung (4) ein erstes Ablenkelement, eine erste Drehwelle und eine erste Torsionsfeder umfasst; das erste Ablenkelement ist drehbar mit der Trocknungsluftleitung (3) über die erste Drehwelle verbunden, und die erste Torsionsfeder ist über die erste Drehwelle gestülpt;
Wenn das Wasch- und Trockengerät das Trocknungsprogramm ausführt, ermöglicht die erste Torsionsschraube, dass die erste Ablenkplatte durch ihre eigene elastische Wirkung den Trocknungsluftkanal (3) von außen blockiert.
Wenn das Wasch- und Trockengerät das Belüftungsprogramm ausführt, wird die erste Torsionsfeder unter der Wirkung des Winddrucks elastisch verdreht, sodass die erste Drosselöffnung den Trocknungsluftkanal (3) mit der Außenluft verbindet; und
Wenn die Wasch- und Trockengerätekombination das Belüftungsprogramm abgeschlossen hat, setzt die erste Federdrehung durch ihre eigene elastische Wirkung die erste Ablenkplatte zurück, um die Trocknungsluftkanal (3) von außen zu blockieren.

5. Das Wasch- und Trockenkombination nach Anspruch 1, wobei die zweite Schaltvorrichtung (5) ein zweites Ablenkelement, eine zweite Drehwelle und eine zweite Biegsprache umfasst; das zweite Ablenkelement ist drehbar über die zweite Drehwelle mit der Trocknungsluftkanal (3) verbunden, und die zweite Biegsprache ist über die zweite Drehwelle gestülpt;
Wenn das Wasch- und Trockengerät das Trocknungsprogramm ausführt, wird die zweite Torsionsfeder unter dem Einfluss des Winddrucks elastisch verdreht, sodass die zweite Ablenkplatte die Trocknungsluftleitung (3) mit dem äußeren Zylinder (1) verbindet; und
Wenn das Wasch- und Trockengerät das Lüftungsprogramm ausführt, blockiert das in der Trocknungsluftleitung (3) enthaltene Wasser den Luftstrom, sodass die zweite Torsionsfeder durch ihre eigene elastische Wirkung die zweite Drosselung nutzt, um die Trocknungsluftleitung (3) vom äußeren Zylinder (1) abzudichten.

6. Das Wasch- und Trockengeräte nach einem der Ansprüche 1 bis 5, wobei die atmungsaktive Vorrichtung (6) ein auf dem äußeren Zylinder (1) gebildetes atmungsaktives Loch, eine Reinigungsmittelbehälter mit einem Öffnung (110) und eine atmungsaktive Rohrleitung umfasst, die das atmungsaktive Loch mit dem Reinigungsmittelbehälter verbindet.

7. Das Wasch- und Trockengeräte nach einem der Ansprüche 1 bis 5, wobei die atmungsaktive Vorrichtung (6) ein drittes Ablenkelement, eine dritte Drehwelle und eine dritte Torsionsfeder umfasst; das dritte Ablenkelement ist drehbar über die dritte Drehwelle mit dem Außenzylinder (1) verbunden, und die dritte Torsionsfeder ist über die dritte Drehwelle gesteckt.
Wenn die Wasch- und Trockengerätekombination das Trockenprogramm ausführt, ermöglicht der dritte Torsionsfeder, dass die dritte Ablenkplatte durch ihre eigene elastische Wirkung den äußeren Zylinder (1) von außen blockiert.
Wenn das Wasch- und Trockengeräte kombinierte Gerät das Lüftungsprogramm ausführt, wird die dritte Torsionsspring unter der Wirkung des Winddrucks elastisch verdreht, sodass die dritte Bremse den Außenzylinder (1) mit der Außenseite verbindet; und
Wenn das Wasch- und Trockengeräte das Belüftungsprogramm abgeschlossen hat, setzt die dritte Torsionsfeder durch ihre eigene elastische Wirkung die dritte Absperrplatte zurück, um den Außenzylinder (1) von außen zu blockieren.

8. Das Wasch- und Trockengeräte nach einem der Ansprüche 1 bis 5, wobei ein Wasserzulaufrohr des Wasch- und Trockengeräte ein U-förmiges Teil umfasst und das atmungsaktive Bauteil (6) ein Wasserablaufrohr umfasst, das mit einem Bodenende des U-förmigen Teils verbunden ist, und eine auf dem Wasserablaufrohr angeordnete und in der Lage ist, den Anschluss- und Ausschluss des Wasserablaufrohrs zu steuern.

9. Das Wasch- und Trockengeräte nach einem der Ansprüche 1 bis 5, wobei die Luftablaufteil (32) ein erstes Luftablaufrohr (321) und ein zweites Luftablaufrohr (322) umfasst; das erste Luftablaufrohr (321) ist über eine erste Luftauslassöffnung mit dem Fenstergummiband (10a) verbunden und befindet sich oberhalb eines schrägen Teils (71) des Türglases (7) des Wasch- und Trockengeräts; das zweite Luftablaufrohr (322) durchquert einen erhabenen Teil der Falten des Fenstergummibands (10a); ein zweiter Luftauslass des zweiten Luftablaufrohrs (322) ist an der Seitenfläche des zweiten Luftablaufrohrs (322) auf der unteren Seite des erhabenen Teils gebildet, und der zweite Luftauslass ist in Nähe des erhabenen Teils angeordnet.

10. Das Wasch- und Trockengeräte nach einem der Ansprüche 1 bis 5, **dadurch gekennzeichnet, dass** das Wasch- und Trockengeräte weiterhin einen Abflussrohr (8) umfasst, das das in der Trocknungsluftleitung (3) enthaltene Wasser selektiv aus der Trocknungsluftleitung (3) ableiten kann.

## Revendications

1. Un appareil intégré de lavage et de séchage, dans lequel l'appareil intégré de lavage et de séchage comprend un cylindre extérieur (1), un joint de fenêtre (10a) connecté à l'extrémité avant du cylindre extérieur (1), un conduit d'air de séchage (3), et un ventilateur (30a) disposé dans le conduit d'air de séchage (3) ; dans lequel une partie d'entrée d'air (31) du conduit d'air de séchage (3) est communicative avec une partie arrière du cylindre extérieur (1), et une partie de sortie d'air (32) du conduit d'air de séchage (3) est communicative avec une partie supérieure du joint de fenêtre (10a) ; dans lequel le conduit d'air de séchage (3) est équipé d'un premier ensemble d'ouverture-fermeture (4) et d'un deuxième ensemble d'ouverture-fermeture (5) ; dans lequel l'appareil intégré de lavage et de séchage comprend en outre un ensemble respirant (6), permettant au cylindre extérieur (1) d'être communicatif avec l'extérieur ;
**caractérisé en ce que** le premier ensemble d'ouverture-fermeture (4) est configuré pour s'ouvrir à un premier seuil de pression du vent, et le deuxième ensemble d'ouverture-fermeture (5) est configuré pour s'ouvrir à un deuxième seuil de pression du vent,
où lorsque l'appareil intégré de lavage et séchage exécute un programme de séchage des vêtements, le ventilateur (30a) est configuré pour être activé afin que la pression d'air dans le conduit de séchage (3) soit supérieure au seuil de pression d'air secondaire et inférieure au seuil de pression d'air primaire, de sorte que le premier ensemble d'ouverture/fermeture (4) soit fermé, l'ensemble respirant (6) soit fermé pour bloquer le cylindre extérieur (1) de l'extérieur du cylindre extérieur (1), et le deuxième ensemble d'ouverture/fermeture (5) soit ouvert sous l'action de la pression d'air ; et
où lorsque l'appareil intégré de lavage et de séchage exécute un programme de ventilation, de l'eau est injectée dans le conduit d'air de séchage (3) et s'accumule au second ensemble d'ouverture-fermeture (5) pour bloquer l'air avant que le ventilateur (30a) ne soit démarré, puis le ventilateur (30a) est démarré pour faire en sorte que la pression d'air dans le conduit d'air de séchage (3) soit supérieure au premier seuil de pression d'air, de sorte que le premier ensemble d'ouverture-fermeture (4) s'ouvre et l'ensemble respirant (6) s'ouvre sous l'action de la pression d'air agissant à l'intérieur du cylindre extérieur (1) et le conduit d'air de séchage (3) contient l'eau pour maintenir le second ensemble d'ouverture-fermeture (5) fermé.

2. L'appareil intégré de lavage et de séchage selon la revendication 1, dans lequel le premier ensemble d'ouverture et de fermeture (4) comprend un premier élément magnétique (41) et un deuxième élément magnétique (42) qui peuvent être attirés l'un vers l'autre sous l'action de la force magnétique et qui sont tous deux connectés au conduit d'air de séchage (3) ; au moins l'un des premier élément magnétique (41) et deuxième élément magnétique (42) est connecté de manière rotative au conduit d'air de séchage (3) ;
Lorsque l'appareil intégré de lavage et de séchage exécute le programme de séchage, le premier membre magnétique (41) et le deuxième membre magnétique (42) entrent en contact sous l'action de l'attraction magnétique pour bloquer le conduit d'air de séchage (3) depuis l'extérieur.
Lorsque l'appareil intégré de lavage et séchage exécute le programme de ventilation, le premier membre magnétique (41) et le deuxième membre magnétique (42) sont séparés sous l'action de la pression du vent pour communiquer le conduit d'air de séchage (3) avec l'extérieur ; et
Lorsque l'appareil intégré de lavage et de séchage termine le programme de ventilation, les premiers et deuxièmes membres magnétiques (41 et 42) sont réinitialisés sous l'action de l'attraction magnétique pour bloquer le conduit d'air de séchage (3) de l'extérieur.

3. L'appareil intégré de lavage et de séchage selon la revendication 1, dans lequel le deuxième ensemble d'ouverture et de fermeture (5) comprend un troisième élément magnétique (51) et un quatrième élément magnétique (52) qui peuvent être attirés l'un vers l'autre sous l'action de la force magnétique et qui sont tous deux connectés au conduit d'air de séchage (3) ; au moins l'un des troisième élément magnétique (51) et du quatrième élément magnétique (52) est connecté de manière rotative au conduit d'air de séchage (3) ;
Lorsque l'appareil intégré de lavage et de séchage exécute le programme de séchage, le troisième membre magnétique (51) et le quatrième membre magnétique (52) sont séparés sous l'action de la pression du vent pour communiquer le conduit d'air de séchage (3) avec le cylindre extérieur (1) ; et
Lorsque l'appareil intégré de lavage et séchage exécute le programme de ventilation, l'eau contenue dans le conduit d'air de séchage (3) bloque le vent pour permettre au troisième membre magnétique (51) de venir en contact avec le quatrième membre magnétique (52), de sorte que le conduit d'air de séchage (3) est bloqué par rapport au cylindre extérieur (1).

4. L'appareil intégré de lavage et de séchage selon la revendication 1, dans lequel le premier ensemble d'ouverture et de fermeture (4) comprend un premier déflecteur, un premier arbre rotatif et un premier ressort de torsion ; le premier déflecteur est rotativement connecté au conduit d'air de séchage (3) par le premier arbre rotatif, et le premier ressort de torsion est monté sur le premier arbre rotatif ;
Lorsque l'appareil intégré de lavage et de séchage exécute le programme de séchage, le premier ressort de torsion permet au premier baffle de bloquer le conduit d'air de séchage (3) depuis l'extérieur grâce à son propre action élastique.
Lorsque l'appareil intégré de lavage et séchage exécute le programme de ventilation, le premier ressort à torsion est tordu élastiquement sous l'action de la pression du vent, ce qui permet au premier déflecteur de communiquer le conduit d'air de séchage (3) avec l'extérieur ; et
Lorsque l'appareil intégré de lavage et séchage termine le programme de ventilation, le premier ressort torsionnel réinitialise le premier déflecteur par son action élastique propre pour bloquer le conduit d'air de séchage (3) depuis l'extérieur.

5. L'appareil intégré de lavage et séchage selon la revendication 1, dans lequel le deuxième ensemble d'ouverture-fermeture (5) comprend une deuxième cloison, un deuxième arbre rotatif et un deuxième ressort de torsion ; la deuxième cloison est rotativement connectée au conduit d'air de séchage (3) par le deuxième arbre rotatif, et le deuxième ressort de torsion est monté sur le deuxième arbre rotatif ;
Lorsque l'appareil intégré de lavage et de séchage exécute le programme de séchage, le deuxième ressort de torsion est tordu élastiquement sous l'action de la pression du vent, de sorte que le deuxième déflecteur communique le conduit d'air de séchage (3) avec le cylindre extérieur (1) ; et
Lorsque l'appareil intégré de lavage et séchage exécute le programme de ventilation, l'eau contenue dans le conduit d'air de séchage (3) bloque le vent, permettant à la deuxième ressort de torsion de bloquer le conduit d'air de séchage (3) depuis le cylindre extérieur (1) par le biais du deuxième déflecteur grâce à son propre action élastique.

6. L'appareil intégré de lavage et séchage selon l'une quelconque des revendications 1 à 5, dans lequel l'assemblage respirant (6) comprend un orifice respirant formé sur le cylindre extérieur (1), un récipient de détergent avec une ouverture (110), et un tube respirant communiquant l'orifice respirant avec le récipient de détergent.

7. L'appareil intégré de lavage et séchage selon l'une quelconque des revendications 1 à 5, dans lequel l'assemblage respirant (6) comprend un troisième baffle, un troisième arbre de rotation et un troisième ressort de torsion ; le troisième baffle est rotativement connecté à la cylindre extérieure (1) par le troisième arbre de rotation, et le troisième ressort de torsion est monté sur le troisième arbre de rotation ;
Lorsque l'appareil intégré de lavage et de séchage exécute le programme de séchage, le troisième ressort de torsion permet au troisième déflecteur de bloquer le cylindre extérieur (1) depuis l'extérieur grâce à son propre action élastique.
Lorsque l'appareil intégré de lavage et séchage exécute le programme de ventilation, le troisième ressort de torsion est tordu élastiquement sous l'action de la pression du vent, permettant ainsi au troisième déflecteur de communiquer le cylindre extérieur (1) avec l'extérieur ; et
Lorsque l'appareil intégré de lavage et séchage termine le programme de ventilation, le troisième ressort de torsion réinitialise le troisième déflecteur par son propre action élastique pour bloquer le cylindre extérieur (1) de l'extérieur.

8. L'appareil intégré de lavage et séchage selon l'une quelconque des revendications 1 à 5, dans lequel un tuyau d'arrivée d'eau de l'appareil intégré de lavage et séchage comprend une partie en U, et l'assemblage respirant (6) comprend un tuyau de sortie d'eau en communication avec une extrémité inférieure de la partie en U, et une valve disposée sur le tuyau de sortie d'eau et capable de contrôler l'ouverture et la fermeture du tuyau de sortie d'eau.

9. L'appareil intégré de lavage et séchage selon l'une quelconque des revendications 1 à 5, dans lequel la partie de sortie d'air (32) comprend une première conduite de sortie d'air (321) et une deuxième conduite de sortie d'air (322) ; la première conduite de sortie d'air (321) est en communication avec la jointure de fenêtre (10a) par le premier orifice d'évacuation d'air et est située au-dessus d'une partie inclinée (71) du verre de porte (7) de l'appareil intégré de lavage et séchage ; la deuxième conduite de sortie d'air (322) traverse une partie convexe des plis de la jointure de fenêtre (10a) ; un deuxième orifice d'évacuation d'air de la deuxième conduite de sortie d'air (322) est formé sur une surface latérale de la deuxième conduite de sortie d'air (322) du côté inférieur de la partie convexe, et le deuxième orifice d'évacuation d'air est disposé à proximité de la partie convexe.

10. L'appareil intégré de lavage et de séchage selon l'une quelconque des revendications 1 à 5, dans lequel l'appareil intégré de lavage et de séchage comprend en outre un tuyau de vidange (8) permettant de décharger sélectivement l'eau contenue dans le conduit d'air de séchage (3) hors du conduit d'air de séchage (3).
